Europäisches Patentamt

European Patent Office

Office européen des brevets

(11) Veröffentlichungsnummer : **0 147 738**
**B1**

# EUROPÄISCHE PATENTSCHRIFT

(45) Veröffentlichungstag der Patentschrift :
02.03.88

(51) Int. Cl.⁴ : **B 01 D 53/14**

(21) Anmeldenummer : 84115391.9

(22) Anmeldetag : 13.12.84

(54) **Verfahren und Vorrichtung zum Auswaschen von Gasbestandteilen aus Gasgemischen.**

(30) Priorität : 20.12.83 DE 3346038

(43) Veröffentlichungstag der Anmeldung :
10.07.85 Patentblatt 85/28

(45) Bekanntmachung des Hinweises auf die Patenterteilung : 02.03.88 Patentblatt 88/09

(84) Benannte Vertragsstaaten :
AT BE DE FR GB IT NL

(56) Entgegenhaltungen :
US-A- 4 475 347

(73) Patentinhaber : **Linde Aktiengesellschaft**
**Abraham-Lincoln-Strasse 21**
**D-6200 Wiesbaden (DE)**

(72) Erfinder : **Karwat, Heinz, Dr.-Dipl.-Chem.**
**Gistlstrasse 60**
**D-8023 Pullach (DE)**

(74) Vertreter : **Schaefer, Gerhard, Dr.**
**Linde Aktiengesellschaft Zentrale Patentabteilung**
**D-8023 Höllriegelskreuth (DE)**

EP 0 147 738 B1

## Beschreibung

Die Erfindung betrifft ein Verfahren zum Auswaschen von Gasbestandteilen aus Gasgemischen durch Wäsche mit einem physikalisch wirkenden Lösungsmittel, das nach Aufnahme der ausgewaschenen Gasbestandteile durch Entspannen und Strippen regeneriert wird, wobei die freiwerdende Gasfraktion abgegeben und das regenerierte Lösungsmittel in die Wäsche zurückgeführt wird, sowie eine Vorrichtung zur Durchführung des Verfahrens.

Es ist bekannt, physikalische Lösungsmittel zur Reinigung von Syntheserohgasen von $CO_2$, COS und $H_2S$ oder von Spaltgasen von Azetylen zu verwenden. Da die Absorptionsfähigkeit der physikalischen Lösungsmittel, wie z. B. Methanol, für die auszuwaschenden Gasbestandteile mit sinkender Temperatur zunimmt, werden diese Wäschen bei möglichst niedriger Temperatur durchgeführt. Bei Verwendung von Methanol liegen die Waschtemperaturen dabei beträchtlich unter 0 °C. Die Regenerierung des mit den ausgewaschenen Gasbestandteilen beladenen physikalischen Lösungsmittels erfolgt meist in einer Kombination von Drucksenkung und/oder Strippen und/oder Warmregenerieren. Dabei werden die absorbierten Gasbestandteile wieder frei. Das regenerierte Lösungsmittel wird in die Wäsche zurückgeführt.

Von den freiwerdenden Gasen können z. B. $CO_2$ und $N_2$, das als Strippgas zur Anwendung kommen kann, direkt in die Atmosphäre entlassen werden. In dieser Gasfraktion ist jedoch immer noch ein Anteil an mitabgetriebenen Lösungsmitteldämpfen vorhanden. Dieser Lösungsmittelgehalt der Gase, die die Wäsche verlassen, richtet sich nach der Temperatur, bei welcher sie vom flüssigen Lösungsmittel abgetrennt werden, sowie nach dem Gasdruck. Nach derzeit geltenden Bestimmungen zur Reinhaltung der Luft darf der Ausstoß an Lösungsmitteldämpfen einen von der jeweiligen Art des Lösungsmittels abhängigen Prozentsatz nicht übersteigen. Aus diesem Grunde wurde bereits vorgeschlagen, die in die Atmosphäre abzugebenden Gase noch einer zusätzlichen Reinigung, z. B. einer Wasserwäsche oder einem Adsorptionsverfahren, zu unterwerfen, um den Lösungsmittelgehalt im Gas abzusenken. Die Abtrennung des Lösungsmittels von Wasser oder die Regenerierung des Adsorbers erfordert aber einen erheblichen Aufwand an Energie und Apparatur.

Der vorliegenden Erfindung liegt daher die Aufgabe zugrunde, ein Verfahren und eine Vorrichtung der eingangs genannten Art so auszugestalten, daß auf einfache und kostengünstige Weise der Gehalt an Lösungsmitteldämpfen der in die Atmosphäre zu entlassenden Gase herabgesetzt wird.

Diese Aufgabe wird erfindungsgemäß dadurch gelöst, daß die freiwerdende Gasfraktion im Wärmetausch zu entgastem Lösungsmittel abgekühlt und mitgeführte Lösungsmitteldämpfe aus der Gasfraktion auskondensiert werden.

Mit dem erfindungsgemäßen Verfahren können z. B. die Bestimmungen zur Reinhaltung der Luft in mehr als befriedigender Weise erfüllt werden. Dabei kann die Wasserwaschsäule oder die Adsorber des bekannten Verfahrens sowie Dampf zum Trennen eines Lösungsmittel-Wasser-Gemisches oder Energie zur Regenerierung von Adsorbern eingespart werden.

Die zur Abkühlung erforderliche Kälte wird dabei im Wärmetausch mit entgastem Lösungsmittel zur Verfügung gestellt, d. h. zu kaltgestripptem oder vakuumentgastem Lösungsmittel, also zu Lösungsmittel, aus dem ohne Zufuhr äußerer Wärme die absorbierten Gasbestandteile entfernt worden sind. Diese Maßnahme kommt besonders dann zum Tragen, wenn der Wäsche keine Tieftemperaturanlage, z. B. eine Wäsche mit flüssigem Stickstoff zur Gewinnung von $NH_3$-Synthesegas, folgt.

Von besonderem Vorteil ist es, wenn die Abkühlung der Gasfraktion bis Temperaturen nahe an den Schmelzpunkt des Lösungsmittels durchgeführt wird. Insbesondere bei Verwendung von Methanol hat es sich als günstig erwiesen, wenn die Abkühlung bis auf Temperaturen von — 50 bis — 97 °C, vorzugsweise — 60 bis — 85 °C, durchgeführt wird. Hierdurch wird es möglich, bis nahe an den $CO_2$-Taupunkt abzukühlen, so daß kaum noch Methanol im zu entlassenden Gas verbleibt. Die tiefsten Temperaturen können — zum Ersatz oder zur Einsparung von Strippgas — durch Anwendung von Unterdruck erreicht werden.

In Weiterbildung des Erfindungsgedankens ist vorgesehen, daß in der freiwerdenden Gasfraktion ein maximaler Methanolgehalt von 300 mg/Nm³ eingestellt wird. Diese Einstellung wird durch entsprechende Abkühlung der Gasfraktion unter Berücksichtigung des Gasdrucks erreicht.

Die Erfindung bezieht sich überdies auf eine Vorrichtung zur Durchführung des Verfahrens mit einer Waschsäule und einer dieser nachgeschalteten Entspannungs- und/oder Strippvorrichtung mit jeweils Zu- und Ablauf für mit ausgewaschenen Gasbestandteilen beladenes bzw. regeneriertes Lösungsmittel sowie Abzugsleitungen für freiwerdende Gasfraktionen. Diese Vorrichtung ist dadurch gekennzeichnet, daß in der Abzugsleitung mindestens ein Wärmetauscher angeordnet ist, und daß der Wärmetauscher mit dem Ablauf für regeneriertes Lösungsmittel aus der Entspannungs- und/oder Strippvorrichtung in Verbindung steht.

Mit dem erfindungsgemäßen Verfahren können alle Gasfraktionen zur Vermeidung von Lösungsmittelverlusten von Lösungsmitteldämpfen abgereichert werden, wie die $H_2S$-Fraktion oder die Azetylenfraktion aus einem Spaltgas, die zwar nicht in die Atmosphäre entlassen werden, aber zur weiteren Verarbeitung von Lösungsmitteldämpfen frei sein sollen. Insbesondere bei der $H_2S$-Fraktion genügt dabei die Abkühlung auf weniger tiefe Temperaturen. Als weitere Fraktionen können die $CO_2$-Fraktion aus der Entspannung und die $CO_2/N_2$-Fraktion aus der Strippung von Lösungsmitteldämpfen abgereichert werden. Das Verfahren ist dabei anwendbar bei allen physikalisch wirkenden Lösungsmitteln, mit insbesondere hohem Dampfdruck, wie z. B. Methanol, Äthanol, Aceton, Dimethylformamid, N-Methylpyrrolidon.

Im folgenden sei das erfindungsgemäße Verfahren anhand eines schematisch dargestellten Ausführungsbeispiels näher erläutert.

Bei 1 strömen 10 000 $Nm^3$/h zu reinigendes Rohgas mit einer Temperatur von — 20 °C und einem Druck von 40 bar in eine Methanolwaschsäule 2 ein. Das Rohgas besteht hauptsächlich aus $H_2$, CO und $CO_2$, enthält aber auch COS und $H_2S$. In der Waschsäule 2 werden im unteren Teil mit einer Methanolteilmenge die Schwefelverbindungen ausgewaschen. Im mittleren Teil der Waschsäule 2 erfolgt die $CO_2$-Grobwäsche mit der Hauptmenge an Methanol und im oberen Teil die Feinreinigung. Im mittleren Teil der Waschsäule 2 wird mit teilregeneriertem, im oberen Teil mit vollständig regeneriertem Methanol gewaschen. Das gereinigte Gas strömt über eine Leitung 3 ab, gegebenenfalls um das zu reinigende Rohgas vorzukühlen und dann zur weiteren Behandlung.

Das mit $CO_2$ beladene Methanol wird über Leitung 4 mit Ventil 5 in einen Abscheider 6 entspannt. Bei der Entspannung wird der Hauptteil des im Methanol gelösten $H_2$ und CO zusammen mit einem kleinen Teil des gelösten $CO_2$ frei und strömt über Leitung 7 aus dem Abscheider 6 zu einem Rückführkompressor 12 und zurück in das Rohgas. Das noch mit $CO_2$ beladene Methanol wird aus dem Abscheider 6 über eine Leitung 8 einer Regeneriersäule 9 zugeführt und in dieser durch Strippen mit einem durch Leitung 10 zugeführten Strippgas, z. B. $N_2$, von $CO_2$ befreit. Die dabei freiwerdenden Gase, hauptsächlich $CO_2$ und der Stickstoff, werden über Kopf der Säule 9 über Abzugsleitung 11 abgeführt. Das $CO_2$-abgereicherte Methanol wird über Leitung 13 wieder auf den Druck der Waschsäule gepumpt 14 und nach teilweiser Anwärmung in einem Wärmetauscher 15 zurück zur Säule 2 geführt und dort als teilregeneriertes Methanol über Leitung 16 in den mittleren Teil eingeführt.

Das sich im Sumpf der Waschsäule 2 ansammelnde, $H_2S$ und $CO_2$ enthaltende Methanol gelangt über Leitung 17 und eine hier nicht dargestellte, zu 5, 6 analoge Zwischenentspannung und Wärmetauscher 18 und 19 in eine Heißregeneriersäule 20. Im Wärmetauscher 18 wird das Methanol auf etwa Umgebungstemperatur, im Wärmetauscher 19 auf ca. 65 °C angewärmt. In der Regeneriersäule 20 wird das Methanol durch Kochen vollständig entgast. Das regenerierte Methanol wird vom Sumpf der Heißregeneriersäule 20 über Leitung 21 abgezogen, in den Wärmetauschern 19 auf 30 °C und 18 auf — 10 °C abgekühlt. Nach weiterer Abkühlung auf etwa — 40 °C in einem Kältemittelverdampfer 22 gelangt das Methanol auf die Waschsäule 2 zurück und wird dort über Leitung 23 als vollständig regeneriertes Methanol in den oberen Bereich aufgegeben. Die in der Heißregeneriersäule 20 freiwerdende $H_2S$- und $CO_2$-Fraktion strömt über Leitung 24 vom Kopf der Säule 20 ab und kann zur Gewinnung von elementarem Schwefel weiter behandelt werden.

Die Gase in der Abzugsleitung 11 enthalten noch etwa 2 g/$Nm^3$ Methanoldampf. Nach derzeit geltenden Bestimmungen darf der Methanolgehalt jedoch 300 mg/$Nm^3$ nicht übersteigen. Erfindungsgemäß ist daher vorgesehen, die in die Atmosphäre zu entlassenden Gase durch Wärmeaustausch mit kalt regeneriertem Methanol zu behandeln. Dazu werden die Gase in einem Wärmetauscher 15 gegen kaltgestripptes Methanol auf — 67 °C abgekühlt und einem Abscheider 26 zugeführt. In diesem Abscheider sammelt sich das auskondensierte Methanol und wird über Leitung 27 abgezogen und in den Methanolkreislauf zurückgegeben. Die nunmehr nahezu vollständig vom Methanol befreite Gasfraktion verläßt den Abscheider 26 nach Teilanwärmung durch Wärmetauscher 25 über Leitung 28 und wird in einem hier nicht dargestellten Wärmeaustauscher gegen Rohgas auf etwa Umgebungstemperatur angewärmt in die Atmosphäre entlassen.

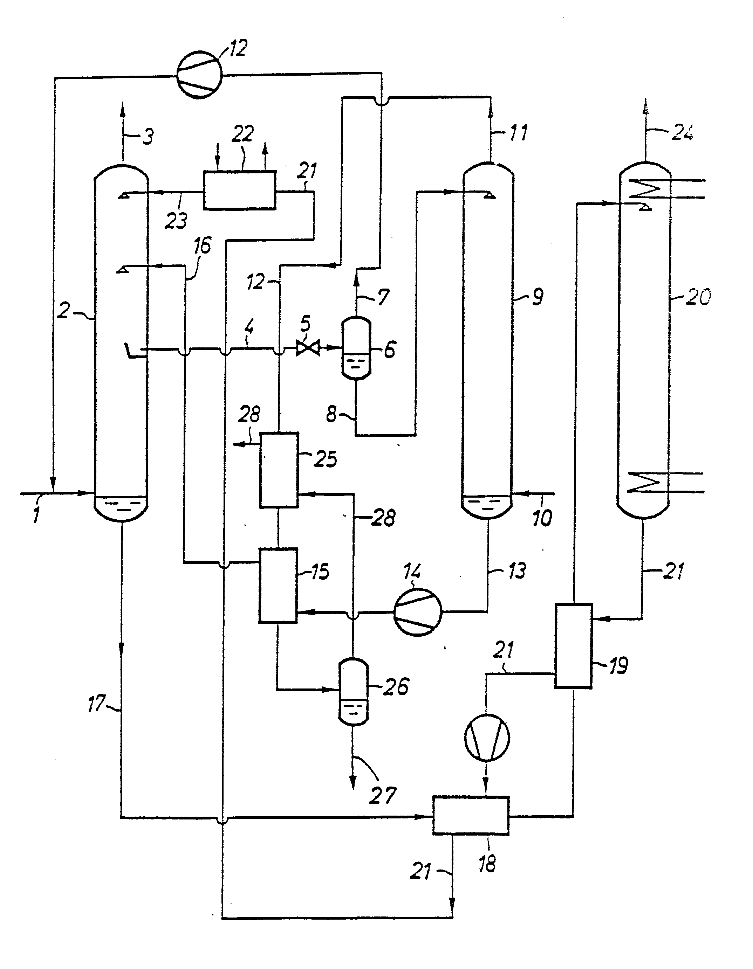

## Patentansprüche

1. Verfahren zum Auswaschen von Gasbestandteilen aus Gasgemischen durch Wäsche mit einem physikalisch wirkenden Lösungsmittel, das nach Aufnahme der ausgewaschenen Gasbestandteile durch Entspannen und Strippen regeneriert wird, wobei die freiwerdende Gasfraktion abgegeben und das regenerierte Lösungsmittel in die Wäsche zurückgeführt wird, dadurch gekennzeichnet, daß die freiwerdende Gasfraktion im Wärmetausch zu entgastem Lösungsmittel abgekühlt und mitgeführte Lösungsmitteldämpfe aus der Gasfraktion auskondensiert werden.

2. Verfahren nach Anspruch 1, dadurch gekennzeichnet, daß die Abkühlung der Gasfraktion bis auf Temperaturen nahe an dem Schmelzpunkt des Lösungsmittels durchgeführt wird.

3. Verfahren nach Anspruch 1 oder 2, unter Verwendung von Methanol als Lösungsmittel, dadurch gekennzeichnet, daß die Abkühlung bis auf Temperaturen von — 50 bis — 97 °C, vorzugsweise — 60 bis — 85 °C, durchgeführt wird.

4. Verfahren nach Anspruch 3, dadurch gekennzeichnet, daß in der freiwerdenden Gasfraktion ein maximaler Methanolgehalt von 300 mg/$Nm^3$ eingestellt wird.

5. Vorrichtung zur Durchführung des Verfahrens nach einem der Ansprüche 1 bis 4 mit einer Waschsäule und einer dieser nachgeschalteten Entspannungs- und/oder Strippvorrichtung mit jeweils Zu- und Ablauf für mit ausgewaschenen Gasbestandteilen beladenes bzw. regeneriertes Lösungsmittel sowie Abzugsleitungen für die freiwerdenden Gasfraktionen, dadurch gekennzeichnet, daß in der Abzugsleitung (12) mindestens ein Wärmetauscher (25, 15) angeordnet ist und daß der Wärmetauscher (15) mit dem Ablauf (13) für regeneriertes Lösungsmittel aus der Entspannungs- und/oder Strippvorrichtung (9) in Verbindung steht.

## Claims

1. Process for removing gaseous constituents from gas mixtures by scrubbing with a solvent which has a physical action and which, after taking up the gaseous constituents that have been scrubbed out, is regenerated by expansion and stripping, the gas fraction that is liberated being discharged and the regenerated solvent being returned to the scrubbing stage, characterized in that the gas fraction that is liberated is cooled by participating in heat exchange with degassed solvent, and carried-over solvent vapours are removed from the gas fraction by condensation.

2. Process according to Claim 1, characterized in that the gas fraction is cooled to temperatures near the melting point of the solvent.

3. Process according to Claim 1 or 2, employing methanol as the solvent, characterized in that the cooling is carried out to — 50 to — 97 °C, and preferably to — 60 to — 85 °C.

4. Process according to Claim 3, characterized in that a methanol content not exceeding 300 mg/m³ (S.T.P.) is established in the gas fraction that is being liberated.

5. Installation for carrying out the process according to any one of Claims 1 to 4, with a scrubbing column and an expansion and/or stripping apparatus which is connected downstream thereof, which possesses an inflow line for solvent that is laden with the gaseous constituents that have been scrubbed out, and an outflow line for solvent that has been regenerated, and which further possesses offtake lines for the gas fractions that are being liberated, characterized in that one or more heat exchangers (25, 15) are installed in the offtake line (11) and in that the heat exchanger (15) is connected to the outflow line (13) via which regenerated solvent leaves the expansion and/or stripping apparatus (9).

## Revendications

1. Procédé d'enlèvement par lavage de composants gazeux de mélanges de gaz au moyen d'un lavage avec un solvant à réaction physique, qui, après absorption des composants gazeux extraits, est régénéré par détente et stripage, la fraction de gaz se libérant étant dégagée et le solvant régénéré étant reconduit vers le lavage, caractérisé en ce que la fraction de gaz se libérant est refroidie par échange thermique avec le solvant dégazé et les vapeurs de solvants entraînées sont condensées hors la fraction de gaz.

2. Procédé selon la revendication 1 caractérisé en ce que le refroidissement de la fraction de gaz est effectué jusqu'à des températures proches du point de fusion du solvant.

3. Procédé selon les revendications 1 et 2 utilisant du méthanol comme solvant, caractérisé en ce que le refroidissement est effectué jusqu'à des températures comprises entre — 50° et — 97 °C, de préférence comprises entre — 60° et — 85 °C.

4. Procédé selon la revendication 3 caractérisé en ce que la fraction de gaz se libérant contient, par réglage, une quantité maximale de méthanol de 300 mg/Nm³.

5. Dispositif pour la mise en oeuvre du procédé conforme à l'une des revendications 1 à 4 comportant une tour de lavage suivie d'un dispositif de détente et/ou de stripage pourvu d'une arrivée et d'une sortie de solvant chargé, respectivement régénéré, de composants gazeux lavés comme de conduites d'évacuation des fractions de gaz libérés caractérisé en ce que au moins un échangeur thermique (25, 15) est prévu dans la conduite d'évacuation et que l'échangeur thermique (15) est raccordé à la sortie (13) de solvant régénéré du dispositif de détente et/ou de stripage (9).